# EUROPEAN PATENT APPLICATION

(11) **EP 2 977 946 A1**
(43) Date of publication of application: **27.01.2016**
(21) Application number: 14177868.8
(22) Date of filing: 21.07.2014
(51) Int. Cl.: G06Q 30/00, G06Q 30/02, G06Q 30/06

(54) **Method and system for providing digital product information to a user of a kitchen or household appliance**

(71) Applicant: Electrolux Appliances Aktiebolag, 105 45 Stockholm (SE)
(72) Inventor: Schieber, Ulrich, 91541 Rothenburg ob der Tauber (DE); Rustemi, Irma, 91541 Rothenburg ob der Tauber (DE); Massaroni, Marcello, 47122 Forli (IT)
(74) Representative: Röder, Richard

(57) **Abstract**

The invention relates to a method for providing digital product information about a kitchen or household appliance (1), the method comprising the consecutive steps of:
- as a first step, supporting by an ordering system (310) an order process of the kitchen or household appliance (1), during which a buyer places an order for said kitchen or household appliance (1) and accepts to receive digital product information about said kitchen or household appliance (1), preferably wherein the buyer accepts to receive only digital product information;
- as a second step at least one of an assembling process or a packaging process of the ordered kitchen or household appliance (1) ordered in the first step, wherein at least one of the ordered kitchen or household appliance or its packaging, preferably the ordered kitchen or household appliance itself, is provided with access information (2) that indicates how to access said digital product information, in particular wherein the ordered kitchen or household appliance (1) is adapted to display said access information (2); and
- as a third step supporting by a product information system (330) an accessing of the digital product information about said ordered kitchen or household appliance (1) by at least one of said buyer or an information recipient based on the access information (2) provided in the second step, in particular wherein said product information system (330) allows to access said digital product information via the Internet.

## Description

Generally, the present invention relates to the field of kitchen or household appliances. More specifically, the present invention relates to a method and a system for providing digital product information to a user of a kitchen or household appliance.

### BACKGROUND OF THE INVENTION

Today, kitchen appliances or household appliances, for example hobs, ovens, washing machines, dryers or dishwashers for use in professional kitchens or for use in private household kitchens as well as further household appliances, for example vacuum cleaners, air condition devices, hair dryers etc., are still delivered to the end consumer with documentation, in general product information, as a printed leaflet or booklet. Surprisingly, manufacturers of kitchen or household appliances still deliver product information in printed form, although digital product information has been available at download servers in the internet for some years already. Since it can be guessed that billions of pages are printed and delivered as user manuals of domestic appliances every year there appears to be a major unsolved environmental and economic problem that has not been effectively addressed for many years.

Therefore, the present inventors decided to investigate thoroughly why essentially all manufacturers of kitchen and household appliances today still prefer to deliver printed user manuals together with the appliances of their production rather than to rely on the already generally available internet as the main channel to distribute product information to their customers. An important result of that investigation was that manufacturers are concerned that essential security and environmental information that is specific for a given kitchen or household appliance of their production will safely reach each consumer. In fact, there are strict legal regulations in essentially all countries that require that manufacturers have to secure that every end user will receive certain product information, specifically safety and environmental information which is often specific for a given appliance.

Surprisingly, the inventors of the present invention have found that by means of the digital product information available today in the Internet the manufacturer of kitchen or household appliance are presently not able to secure in a legally safe way that each user will obtain the required product specific information. One partial problem is that still not all customers have ready access to the Internet and to digital product information, e.g. via a smartphone or a tablet computer. Another partial problem is that no reliable routines have been established yet in the market that would allow to provide consumers with product information in a safe way and that would therefore allow manufacturers to deliver their appliances without any written product information while avoiding any undue legal risks. So, there exists the still unsolved problem which has a major environmental and economical impact that kitchen or household appliances are today still delivered for safety and legal reasons with printed product information which has also to be provided in a plurality of languages in order to make sure that every user is able to obtain product information in a suitable language, and which requires using on a global scale a huge amount of paper which often may even not be read by the end user.

### SUMMARY OF THE INVENTION

It is an objective of the present invention to provide a cost-efficient and environment-friendly and legally safe method for making product information available to a user of a kitchen or household appliance. In addition, also an improved system for providing product information to a user of a kitchen or household appliance is desired. The objective is solved by the features of the independent claims. Preferred embodiments are given in the dependent claims. If not explicitly indicated otherwise, embodiments of the invention can be freely combined with each other.

According to a first aspect of the invention, the invention relates to a method for providing digital product information about a kitchen or household appliance, the method comprising the consecutive steps of:
- as a first step, supporting by an ordering system an order process of the kitchen or household appliance, during which a buyer places an order for said kitchen or household appliance and accepts to receive digital product information about the kitchen or household appliance, preferably wherein the buyer accepts to receive only digital product information;
- as a second step at least one of an assembling process or a packaging process of the ordered kitchen or household appliance ordered in the first step, wherein at least one of the ordered kitchen or household appliance or its packaging, preferably the ordered kitchen or household appliance itself, is provided with access information that indicates how to access said digital product information, in particular wherein the ordered kitchen or household appliance is adapted to display said access information; and
- as a third step supporting by a product information system an accessing of the digital product information about said ordered kitchen or household appliance by at least one of said buyer or an information recipient based on the access information provided in the second step, in particular wherein said product information system allows to access said digital product information via the Internet.

So, during the order process, information is gathered that the customer wishes digital product information and no printed product information is needed. In the following assembly process, the ordered kitchen or household appliance is assembled according to said information, i.e. no printed product information will be added during packaging, but the kitchen or household appliance may comprise access information indicating how to access the product information. So, the method enables the information recipient, for example the end user, to access the product information by using said access information provided together with the kitchen or household appliance as a link to the product information. Said product information may be stored, for example, in a product information system comprising data storage. The product information system may be accessible via a data network, specifically the internet.

According to embodiments, in order to finalize the order process according to said first step, a confirmation by the buyer is required that at least one of the buyer or said product information recipient is able to access said digital product information. Specifically, the order form may comprise a field or box which has to be ticked or checked in order to confirm that the end user comprises means for receiving digital product information instead of printed product information, e.g. has access to the data network by suitable hardware, for example a smartphone or a tablet computer or the like.

According to embodiments, the ordering system is a fully automated ordering system or an ordering system at least partly involving communication between persons. The ordering system may comprise a central server and a plurality of clients, wherein the clients comprise a user interface for providing the order form to the buyer or a regional distributor. For example, said client may be constituted by a data processing unit of the buyer, e.g. a tablet computer, smartphone or personal computer connected with the client via the Internet.

According to embodiments, the method comprises an additional step of delivery of the ordered kitchen or household appliance to either said buyer or said product information recipient, wherein said additional step is performed between said second and said third step.

According to embodiments, said digital product information comprises at least one of operation information or safety information for the ordered kitchen or household appliance, preferably wherein at least providing said safety information is required by law in a country where the ordered kitchen or household appliance is delivered to said buyer or said product information recipient.

According to embodiments, said digital product information is provided either only, or in at least a prominent delivery form in at least one language identified during said first step, preferably wherein said at least one identified language is an official language in a country where said ordered kitchen or household appliance shall be delivered, preferably wherein said at least one identified language is an official language in a country where said ordered kitchen or household appliance shall be operated.

According to embodiments, in order to finalize the order process according to said first step, a confirmation by the buyer is required, in order to confirm that at least one of the buyer or the product information recipient is able to use or understand said at least one identified language.

According to embodiments, said digital product information is specific for the actual model of said ordered kitchen or household appliance.

According to embodiments, said second step, preferably at least said assembling process, is performed by a manufacturer of said ordered kitchen or household appliance.

According to embodiments, the access information is a code being configured to be scanned by an electronic scanning device. The code may be a bar code, a QR-code or any other machine-readable code. By scanning said code, information regarding the product information of the household device is obtained, specifically, a download process of the product information is activated. The scanning device may be any device being capable of reading the access information. The scanning device may comprise a code scanner or a camera for reading the access information. Specifically, the scanning device may be a mobile phone, a smartphone or a tablet computer.

According to embodiments, after scanning said access information, product information associated with the kitchen or household appliance may be downloaded from a product information system. The access information may provide a link to the product information to be downloaded or may initiate a search routine for searching product information being correlated with the kitchen or household appliance. So, the product information of the kitchen or household appliance is obtained in an automated way.

According to further embodiments, by scanning the access information by means of the electronic scanning device, language or geographical information is gathered based on information available at the scanning device and a suitable language is identified or selected based on said information. The language information may be obtained by a language setting of the scanning device. Alternatively or additionally, the scanning device may comprise means for gathering geographical position data and the language of the product information is derived based on the geographical position data. Said means for gathering geographical position data may be constituted by a geographic position sensor, specifically a GPS sensor of the scanning device. Thereby, product information in a suitable language is provided to the information recipient.

According to further embodiments, the access information comprises information regarding the type or model of the kitchen or household appliance. For example, the access information may comprise information regarding the serial number or an equivalent identifier for determining the type/model of the kitchen or household appliance. Thereby, the appropriate product information for the household device may be automatically selected based on said access information.

According to further embodiments, the access information comprises information regarding a service organization being available or responsible for service of the kitchen or household appliance. In case of a technical problem or in case that further information is needed, after scanning the access information, the customers service or information request may be forwarded to the service organization being responsible for service of the kitchen or household appliance.

According to further embodiments, the said access information is placed at the packaging of the kitchen or household appliance or at the outer surface of the kitchen or household appliance. The access information may be an adhesive label being directly attached to the kitchen or household appliance or the package of said kitchen or household appliance. The scanning device may be adapted to store the access information (only the coded label information or the label as a graphic file). After storing, said information can be repetitively used. So, the label can be removed from the kitchen or household appliance and does not have to be stored for further scanning procedures.

According to further embodiments, the access information is displayed at a graphical display of the kitchen or household appliance. The kitchen or household appliance may comprise a storage for storing information regarding the access information. By accessing the storage, the display may receive the access information data from the storage. Thus, the access information can be displayed when a technical documentation or manual of the kitchen or household appliance is needed.

According to further embodiments, in case of a technical problem of the kitchen or household appliance, the access information displayed at a graphical display comprises further information regarding the occurred technical problem. In case of a technical error, said access information may also be used for providing an error code. So, by scanning the access information, information regarding the occurred error may be transmitted to a technical support centre. As already mentioned above, the access information may also comprise information regarding the type/model of the kitchen or household appliance thereby enabling the technical support centre to provide optimized support services.

According to further embodiments, the order process according to said first step comprises retrieving an email address by the ordering system. Thereby it is possible to provide additional information by email to a user, for example a specific application for scanning the access information.

According to a second aspect, the invention also refers to a system for providing digital product information about a kitchen or household appliance, the system comprising:
- an ordering system being adapted receive an order of a kitchen or household appliance and being adapted to retrieve information during the order process of said kitchen or household appliance that a user accepts to receive digital product information about the kitchen or household appliance, preferably wherein the buyer accepts to receive only digital product information;
- an access information generating entity for generating access information to be placed at the kitchen or household appliance or to be stored in a storage entity of the kitchen or household appliance in order to be displayed at a graphical display of the kitchen or household appliance, the access information indicating how to access the digital product information; and
- a product information system for providing digital product information of the kitchen or household appliance, the product information system comprising a data interface for receiving said access information, the product information system being adapted to provide said digital product information of the kitchen or household appliance via the data interface based on the received access information.

Referring now to a third aspect of the present invention, it has further been observed by the present inventors that the manufacturers of kitchen or household appliances in practice do not rely today on the ready use by their customers of code scanners, such as bar code or QR codes scanners, which are already today available as e.g. by code reader app on a smart phone of a customer, for providing to their customers via the Internet digital product information by putting corresponding bar codes or QR codes on their products. Rather, essentially all manufacturers today still prefer to provide printed user manuals with legally required safety and environmental product information with each delivered appliance. In fact, each user manual is frequently provided in a multitude of languages for each sold appliances, because the cost of providing a user manual in just the one language used by the customer of a given appliance is rendered unacceptable by logistic reasons.

The main reason for that present wasteful practice has again been identified by the present inventors as the concern of the manufacturers to fulfil their legal product information requirements. Said legal product information requirements have been recognized by the present inventors to in effect forbid the manufacturers to simply rely on a ready use of bar code scanners or QR code scanner by their customers for retrieving by themselves from the Internet the legally required product information, e.g. using a QR code app on their smart phone.

Contemplating further the reason for the above described newly-identified manufacturers' legal insecurity to use user-scannable codes on products as the major source for legally required product information, the inventors have observed a surprisingly simple reason. Namely that QR codes or bar codes have already been applied in many different contexts on kitchen and household appliances themselves, on their package, on their user manuals and in print media and advertisements, for example for advertisement reasons or for advertisement-related entertainment of customers. Now, the inventors have observed that said widespread use of user-scannable codes has avoided that bar codes or QR codes are readily appreciated by consumers as source for retrieving the definite specific product-information that is universally distributed via printed user manuals. In particular, since user-operable scanners for said codes have been available only for a relatively short time there has not been established so far any legally safe, i.e. any generally relied-on use in the market to provide legally-required safety or environmental product information via any code such as a bar code or a QR code. Therefore, placing any bar code or QR code as such on an appliance or on its packaging has been identified in the present invention as not sufficient for a manufacturer to meet the legal requirements to ensure that every customer safely receives the product-specific safety and environmental information.

Thus, the corresponding, previously unrecognized problem could be identified in the present invention as how to render a user-scannable code, such as e.g. a bar code or a QR code, a legally safe access information to product-specific digital information on a suitable user-accessible database, i.e. on the Internet.

According to the third aspect, the invention also refers to a system for providing digital product information about a kitchen or household appliance, comprising digital product information about the kitchen or household appliance and access information, wherein the access information is adapted to be placed at a packaging of said kitchen or household appliance or to be placed at or displayed on the kitchen or household appliance itself or is provided on an appliance document about the kitchen or household appliance and the access information indicates how to access said digital product information about the kitchen or household appliance, and the access information comprises an indication in writing that it provides access to the product information.

According to preferred embodiments, the access information can comprise a code, e.g. a bar code or a QR-code. The code can be scanned by a scanning device to provide access to digital product information. The access information preferably comprises in addition a written indication that it provides access to product information. The access information can be implemented as a unit that comprises both, a code that is configured to be scanned by an electronic device, e.g. as described herein with reference to bar codes or QR-codes, and an indication in writing that the accompanying code provides access to product information. Preferably, the written indication can be arranged and executed graphically to draw the attention of a user to the fact that that code provides access to important digital product information. For example, the code and the corresponding written indication can be arranged together on an adhesive sticker that can be attached at at least one suitable position of the kitchen or household appliance, such as in the region of a user interface and/or in a region where the type label of the appliance is usually arranged, such as a door edge. Instead of an adhesive sticker a printing comprising both the code and the corresponding written indication in a suitable common spatial arrangement can be applied to the appliance. In alternative, or preferably in addition, the code and the corresponding written indication can be arranged together on a packaging of the kitchen or household appliance, such as a plastic foil wrap or a cartonage for transport. Still in alternative or preferably in addition to the arrangement on the appliance itself and/or on its packaging the code and the corresponding written indication can be arranged together on an appliance document, i.e. on any papers that are delivered together with the appliance, such as an invoice, an order confirmation, a receipt or on a paper copy of a user manual, the latter especially if the buyer wants to have access to both, paper and digital product information.

In particularly useful embodiments, the code and the corresponding written indication can be provided together in close arrangement to each other by optical display means of the appliance, for example, they can be shown together on a user display of the appliance or they can be projected by a projection unit of the appliance on a visible surface of the appliance or close to it. For example they can be projected onto a door of the appliance. For example, the appliance can be adapted to automatically display the code and the corresponding written indication can together in close arrangement when an operation problem of the appliance occurs or if the appliance receives a requests from a user to display digital product information.

In further preferred embodiments, the system of the third aspect of the invention can comprise any of the features of the system of the second aspect and/or of the method of the first aspect of the invention, or the system of the third aspect can be an embodiment of the second aspect of the invention.

The terms "essentially", "substantially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
Fig. 1 shows an example schematic view of a kitchen or household appliance comprising access information;
Fig. 2 shows an example schematic flowchart of a method for providing product information to an information recipient; and
Fig. 3 shows an example schematic diagram of a system for providing product information to an information recipient.
Fig. 4 shows an example of a kitchen or household appliance comprising access information with a written indication that it provides access to product information.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

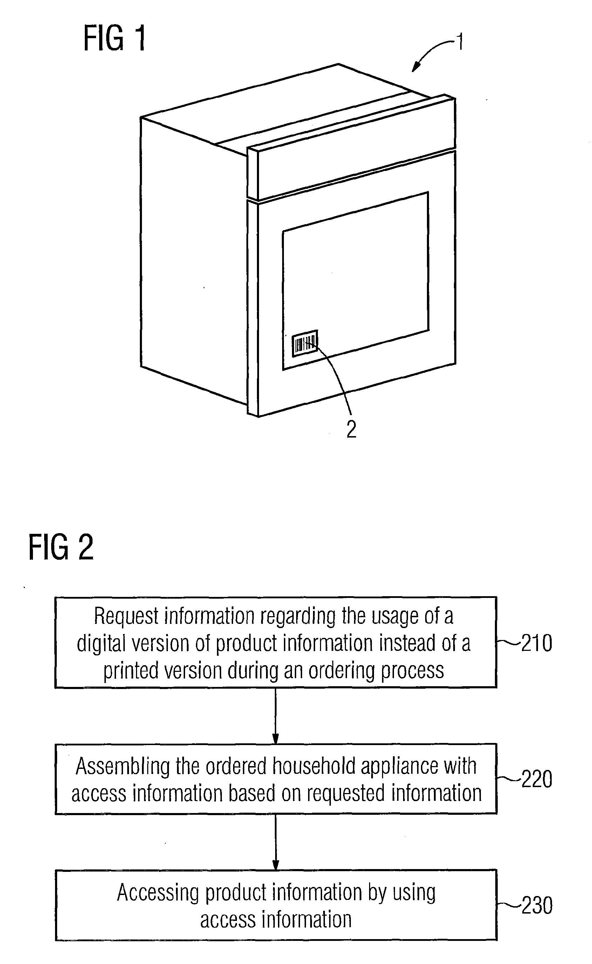

Fig. 1 shows a schematic diagram of a kitchen or household appliance 1, in the present example, a baking oven, such as for example an oven for a professional catering kitchen or an oven for a private household. Typically, kitchen or household appliances are delivered together with paper user manuals in paper form that comprise technical operation instruction information about the appliance, technical safety info and environmental information about the appliance. In the following, said information (user manual, environmental information etc.) is also referred to as product information. In order to avoid delivery of product information in paper from, the kitchen or household appliance 1 of the invention comprises access information 2 which can be used by an information recipient, especially the user of the kitchen or household appliance, but which may also be used by a technician to receive digital product information.

The access information 2 may be any kind of information being capable for providing a link to digital product information, for example, text, graphics or a code, for example a bar code or a QR-code. The access information 2 may be attached to the packaging of the kitchen or household appliance 1, for example, a foil being wrapped around the kitchen or household appliance 1, or may be attached to the outer surface of the kitchen or household appliance 1 etc. Also multiple attaching of access information 2 is possible. The access information 2 may be, for example, an adhesive label attached to the kitchen or household appliance 1.

According to a further example, the access information 2 may be stored in an electronic data storage entity of the kitchen or household appliance 1 and the kitchen or household appliance 1 may comprise an electronic graphical display for displaying said access information 2. Thereby, the access information 2 can be also provided at the kitchen or household appliance 1 without any optical impairment.

For accessing digital product information, for example a digital version of a user manual, the information recipient may use the access information 2 as a link or hint to the desired digital product information. For example, the access information 2 may be scanned by a scanning device, for example a smart phone or a tablet computer, processed inside the scanning device in order to display digital product information of the kitchen or household appliance 1. For example, the scanning device may comprise an application (app) configured for accessing digital product information based on the scanned access information 2. In other words, after activating the application and scanning the access information 2, digital product information may be directly displayed at the scanning device.

Preferably, the scanning device comprises information regarding the language used by the information recipient. Said information may be derived by a language setting of the scanning device, geographical position data obtained by a position sensor (e.g. GPS sensor) of the scanning device etc. Based on the information regarding the language used by the information recipient, digital product information may be automatically displayed in a language which may be understood by the information recipient.

Figure 2 shows the process of providing digital product information to an information recipient in closer detail. In order to avoid an undesirable shipment of printed product information, the buyer of the kitchen or household appliance has to decide whether he needs a printed version of the product information or not. So, during the order process, the order system may request information if the buyer wants to use a digital version of product information instead of a printed version (step 210). In particular, the buyer may be asked to confirm that no printed product information is needed. Preferably, the buyer may also be requested to confirm that he is able to access the digital product information, for example via internet. In addition, during the order process the email address of the buyer may be retrieved which is used for further communication, e.g. sending files, providing links or proposals for apps, specifically apps for reading/scanning the access information by the scanning device.

After placing the order, the ordered kitchen or household appliance may be assembled based on the retrieved information (step 220). Specifically, the kitchen or household appliance may be assembled with printed product information if the buyer does not want to use the digital version of product information. If a digital version of the product information has been acknowledged, the ordered kitchen or household appliance shall be assembled with access information providing a link to the digital version of product information. Said digital version of product information may be, for example, an electronic data file comprising said digital product information, specifically a pdf-file or the like.

As already mentioned above, the access information may be, for example, a code comprising information regarding the type and/or model of the kitchen or household appliance. Specifically, the access information may comprise information regarding a model, a PNC (product number code) and/or a serial number of the kitchen or household appliance in order to unambiguously determine the type and/or model of the kitchen or household appliance. Said assembling may also comprise the process of storing the access information within an electronic data storage means of the kitchen or household appliance in order to be able to display said access information at a graphical display of the kitchen or household appliance.

Finally, after delivery of the kitchen or household appliance, the buyer may access the digital product information by using the access information as a link to the digital product information (step 230). For example, the buyer or user of the kitchen or household appliance may scan the access information using a scanning device, the scanning device being adapted to retrieve digital product information of the kitchen or household appliance from a central data storage based on the information regarding the type and/or model of the kitchen or household appliance contained within the access information.

Preferably, the kitchen or household appliance may be assembled with an indicator or link, such as e.g. a bar code or QR code, for downloading an application, for example an app, to be stored at the scanning device. By means of said application or app, a scanning device, for example a mobile phone or a tablet computer comprising a camera, may be used for scanning the access information (by means of said camera) and displaying the digital product information associated with said kitchen or household appliance at a graphical interface of the scanning device. Said application or app may further be used for determining the language of the digital product information to be displayed, providing after sales information to the user, arranging a service visit or registration of the user and/or collecting feedback data from the customer after providing repair services.

In addition, the access information may also be used for contacting a service organization providing technical support for the kitchen or household appliance. For example, after scanning the access information, the user may be able to select whether he intends contacting the service organization or digital product information is desired. When contacting to the service organization is desired, the scanning device may transmit information regarding the type and/or model of the kitchen or household appliance to the service organisation in order to enable the service organization to provide specific technical support for the actual type of kitchen or household appliance. Furthermore, the access information may also be used for contacting the service organization responsible for supporting said type of kitchen or household appliance.

As already mentioned above, the access information may also be displayed at a graphical user interface, i.e. a graphical display of the kitchen or household appliance (for example, in addition to access information directly attached to the kitchen or household appliance, e.g. as adhesive label). Said displayed access information may comprise identical information as the access information attached to the kitchen or household appliance. In case of a technical problem of the kitchen or household appliance, additional error information may be added to displayed access information. The additional error information may be, for example, an error code indicating the occurred error of the kitchen or household appliance. In other words, in case of a technical problem, not only information regarding the type/model of the kitchen or household appliance may be included in the access information but also information regarding the occurred error. By scanning the access information a by means of the scanning device and forwarding said access information to a service organisation, the service organisation is able to provide detailed support information based on information regarding the type/model of the appliance and error information. In addition, said access information comprising error information may also be used by an technician at the customers site for getting precise information regarding the occurred failure, e.g. by means of a description in a service documentation which may be opened after scanning the access information. Also further information may be gathered by scanning said access information, for example, a spare part list or spare parts required for fixing the problem.

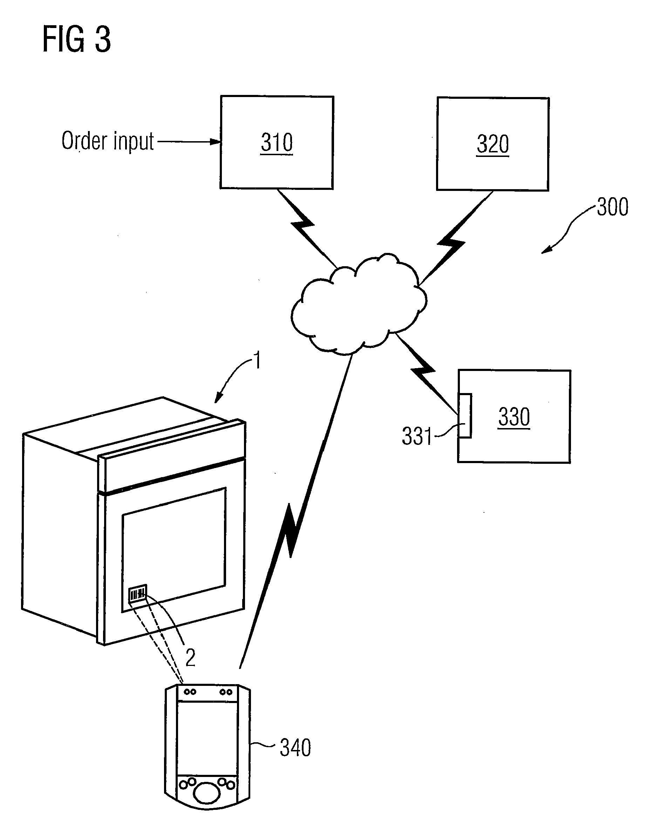

Fig. 3 shows a system 300 for providing digital product information of a kitchen or household appliance to an information recipient. The system 300 comprises an ordering system 310, an access information generating entity 320 and a product information system 330. The ordering system 310 is configured to retrieve information (order input data) during the order process of a kitchen or household appliance regarding using digital product information instead of paper form information from a person placing the order. For example, the ordering system 310 provides an order form to said person, said order form comprising a form field indicating if product information should be provided only in digital format.

If the person placing the order confirms that he does not require a printed version of product information, the kitchen or household appliance may be assembled without printed product information. The ordering system 310 may trigger the access information generating entity 320 coupled with the ordering system 310 via a data network to generate access information to be placed at the ordered kitchen or household appliance or to be stored in a storage entity of the ordered kitchen or household appliance in order to be displayed at a graphical display of the kitchen or household appliance, the access information indicating how to access the digital product information.

The digital product information may be provided by a product information system 330. The product information system 330 may comprise a data interface 331 for exchanging data with a scanning device 340 via a data network, e.g. via internet. After scanning access information at the kitchen or household appliance 1, the scanning device 340 may transmit a digital product information request comprising at least information regarding the type/model of the kitchen or household appliance 1 to the product information system 330. After receipt of the digital product information request, the product information system 330 may provide said requested digital product information data to the scanning device 340.

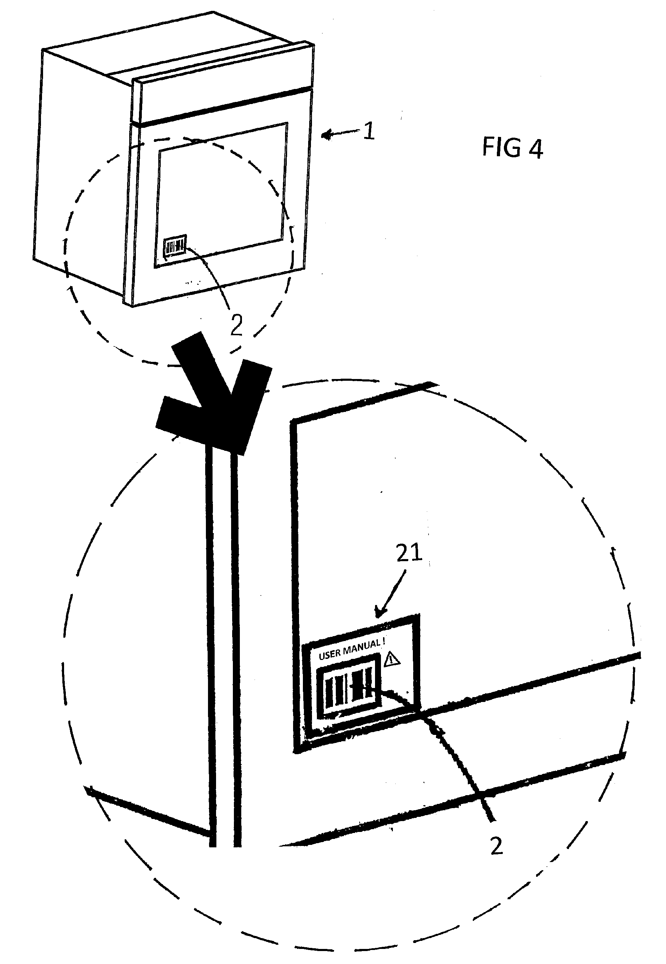

Figure 4 shows an access information 2 that comprises a written indication 21 which are both arranged in close spatial correspondence to each other on the frontal side of a kitchen or household appliance 1. The access information 2 and the written indication 21 are arranged in suitable relation to each other to signal to a user that the code 2 provides access to important digital product information. They are both surrounded by a common graphical frame that indicates that they refer to each other. In the example shown they may for example be comprised on a common adhesive sticker or formed by printing as a common label, or they may be produced optically by an electronic display means of the appliance that has a sufficient resolution to display a code such as a bar code or a QR code that can be effectively scanned by a scanning device.

Above, embodiments of a method and a system for providing digital product information to a user of a kitchen or household appliance according to the present invention as defined in the appended claims have been described. These should be seen as merely non-limiting examples. As understood by a skilled person, many modifications and alternative embodiments are possible within the scope of the invention.

### List of reference numerals

- 1: household device
- 2: access information
- 21: indication in writing
- 300: system
- 310: ordering system
- 320: access information generating entity
- 330: product information system
- 331: data interface
- 340: scanning device

## Claims

1. Method for providing digital product information about a kitchen or household appliance (1), the method comprising the consecutive steps of:
- as a first step, supporting by an ordering system (310) an order process of the kitchen or household appliance (1), during which a buyer places an order for said kitchen or household appliance (1) and accepts to receive digital product information about the kitchen or household appliance (1), preferably wherein the buyer accepts to receive only digital product information;
- as a second step at least one of an assembling process or a packaging process of the ordered kitchen or household appliance (1) ordered in the first step, wherein at least one of the ordered kitchen or household appliance or its packaging, preferably the ordered kitchen or household appliance itself, is provided with access information (2) that indicates how to access said digital product information, in particular wherein the ordered kitchen or household appliance (1) is adapted to display said access information (2); and
- as a third step supporting by a product information system (330) an accessing of the digital product information about said ordered kitchen or household appliance (1) by at least one of said buyer or an information recipient based on the access information (2) provided in the second step, in particular wherein said product information system (330) allows to access said digital product information via the Internet.

2. Method according to claim 1, wherein in order to finalize the order process according to said first step, a confirmation by the buyer is required that at least one of the buyer or said product information recipient is able to access said digital product information.

3. Method according to claim 1 or 2, wherein the ordering system is a fully automated ordering system (310) or an ordering system at least partly involving communication between persons.

4. Method according to anyone of the preceding claims, comprising an additional step of delivery of the ordered kitchen or household appliance (1) to either said buyer or said product information recipient, wherein said additional step is performed between said second and said third step.

5. Method according to anyone of the preceding claims, wherein said digital product information (2) comprises at least one of operation information or safety information for the ordered kitchen or household appliance (1), preferably wherein at least providing said safety information is required by law in a country where the ordered kitchen or household appliance (1) is delivered to said buyer or said product information recipient.

6. Method according to anyone of the preceding claims, wherein said digital product information (2) is provided either only, or in at least a prominent delivery form in at least one language identified during said first step, preferably wherein said at least one identified language is an official language in a country where said ordered kitchen or household appliance (1) shall be delivered, preferably wherein said at least one identified language is an official language in a country where said ordered kitchen or household appliance (1) shall be operated.

7. Method according claim 6, wherein in order to finalize the order process according to said first step, a confirmation by the buyer is required, in order to confirm that at least one of the buyer or the product information recipient is able to use said at least one identified language.

8. Method according to anyone of the preceding claims, wherein said digital product information is specific for the actual model of said ordered kitchen or household appliance (1) and/or said second step, preferably at least said assembling process, is performed by a manufacturer of said ordered kitchen or household appliance (1).

9. Method according to anyone of the preceding claims, wherein said access information is a code being configured to be scanned by an electronic scanning device, in particular wherein after scanning said access information (2), digital product information is downloaded from a product information system (330).

10. Method according to claim 9 or 10, wherein by scanning the access information (2) by means of an electronic scanning device (340), language or geographical information relating to the buyer is gathered by the ordering system (310) based on information available at the scanning device (340) and a suitable language is identified based on said information.

11. Method according to anyone of the preceding claims, wherein the access information (2) comprises information regarding a service organization being available for service of the kitchen or household appliance (1).

12. Method according to anyone of the preceding claims, wherein said access information (2) is placed at a packaging of the kitchen or household appliance (1) or at an outer surface of the kitchen or household appliance (1) and/or the access information (2) is displayed at a graphical display of the kitchen or household appliance (1), in particular wherein in case of a technical problem of the kitchen or household appliance (1), the access information (2) displayed at a graphical display comprises further information regarding the occurred technical problem.

13. Method according to anyone of the preceding claims, wherein the order process according to said first step comprises retrieving an email address by the ordering system (310) for providing additional information to at least one of said buyer or said product information recipient.

14. System for providing digital product information about a kitchen or household appliance (1), the system (300) comprising:
- an ordering system (310) being adapted receive an order of a kitchen or household appliance and being adapted to retrieve information during the order process of said kitchen or household appliance (1) that a user accepts to receive digital product information about the kitchen or household appliance (1), preferably wherein the buyer accepts to receive only digital product information;
- an access information generating entity (320) for generating access information (2) to be placed at the kitchen or household appliance (1) or at a packaging thereof or to be stored in a storage entity of the kitchen or household appliance (1) in order to be displayed at a graphical display of the kitchen or household appliance (1), the access information (2) indicating how to access the digital product information; and
- a product information system (330) for providing digital product information of the kitchen or household appliance (1), the product information system (330) comprising a data interface (331) for receiving said access information (2), the product information system (330) being adapted to provide said digital product information of the kitchen or household appliance (1) via the data interface (331) based on the received access information (2).

15. System (300) for providing digital product information about a kitchen or household appliance (1), in particular according to claim 14, comprising digital product information about the kitchen or household appliance (1) and access information (2), wherein the access information (2) is adapted to be placed at a packaging of said kitchen or household appliance or to be placed at or displayed on the kitchen or household appliance (1) itself or is provided on an appliance document about the kitchen or household appliance, the access information indicates how to access said digital product information, and the access information (2) comprises an indication in writing (21) that it provides access to the product information, preferably wherein the access information comprises a user-scannable code such as e.g. a QR code or a bar code.
